(19) **Europäisches Patentamt / European Patent Office / Office européen des brevets**

(11) **EP 4 535 524 A2**

(12) **EUROPEAN PATENT APPLICATION**

(43) Date of publication:
**09.04.2025 Bulletin 2025/15**

(21) Application number: **24201467.8**

(22) Date of filing: **19.09.2024**

(51) International Patent Classification (IPC):
**H01M 50/172** (2021.01)   **H01M 50/463** (2021.01)
**H01M 50/471** (2021.01)

(52) Cooperative Patent Classification (CPC):
**H01M 50/172; H01M 50/463; H01M 50/471;**
H01M 50/105

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.10.2023 US 202363542587 P**
**20.08.2024 US 202418809612**

(71) Applicant: **Lasagna.one Inc.**
**San Jose, CA 95134 (US)**

(72) Inventors:
• **Katoh, Yuki**
  **San Jose (US)**
• **Lin, Xi**
  **San Jose (US)**
• **Ohashi, Akinari**
  **San Jose (US)**
• **Chavez, Sarah Gabrielle**
  **San Jose (US)**

(74) Representative: **London IP Ltd**
**100 High street**
**Milford on Sea**
**Lymington, Hampshire SO41 0QE (GB)**

(54) **BIPOLAR BATTERY**

(57)    A bipolar stacked battery has a plurality of bipolar electrodes. Each of the bipolar electrodes has a current collector. A cathode layer containing a cathode active material is formed on a first surface of the current collector. An anode layer containing an anode active material is formed on a second surface of the current collector. A separator layer is formed on the cathode layer and the anode layer, wherein the separator layer extends past opposing side edges of the cathode layer and the anode layer. An insulator is formed on exposed side edges on at least one side of the current collector and extends past the current collector. A pair of terminal stacks is provided, wherein one of the pair of terminal stacks is formed at a higher voltage side of the bipolar stacked battery and a second of the pair of terminal stacks is formed on a lower voltage side of the bipolar stacked battery.

FIGURE 2

EP 4 535 524 A2

**Description**

**RELATED APPLICATIONS**

This patent application is related to U.S. Provisional Application No. 63/542,587 filed October 5, 2023, entitled "BIPOLAR BATTERY", in the names of the present inventors and which is incorporated herein by reference in its entirety. The present patent application claims the benefit under 35 U.S.C §119(e) of the aforementioned provisional application.

**TECHNICAL FIELD**

This disclosure generally relates to batteries, more particularly, to a bipolar battery.

**BACKGROUND OF THE INVENTION**

Electric vehicles (EVs) have become increasingly prevalent in the market as an alternative to traditional internal combustion vehicles, largely due to their environmentally friendly nature and advanced technological features. The operation of electric vehicles heavily relies on their battery systems, which provide the necessary electrical energy to power the motors.

Conventionally, in order to generate sufficient voltage to operate high torque motors in vehicles, a large number of batteries are connected in series. However, this design has several inherent drawbacks. One drawback, for example, is that the stacking of batteries in series necessitates a significant number of joint parts. Joint parts not only contribute to a loss of energy density and power density due to volumetric loss, but they also introduce additional resistance, leading to a decrease in power density. Moreover, joint parts tend to focus current around the jointed areas, resulting in inhomogeneous temperature and current distribution across the batteries. This can ultimately contribute to the premature degradation of the battery system.

To address these challenges, bipolar batteries have been developed. In these bipolar batteries, a positive electrode and a negative electrode are arranged on both sides of a collector, significantly reducing the need for joint parts.

However, these bipolar batteries come with their own set of problems. Specifically, they present a risk of shortage: if current collectors from different layers come into contact, the battery cells fail to exhibit the necessary voltage, leading to lower overall voltage. Similarly, if the electrolytes of different battery layers touch, the cells likewise fail to produce the required voltage.

Some have used separators made of inorganic solid electrolyte to avoid electrical short circuits. This particular method involves covering the current collector with an insulating polymer to prevent electrical short circuits. This approach, however, still leaves open the risk of ionic short circuits. Specifically, if the electrolyte collapses due to external shock, the separator may generate small particles, causing the electrolytes of different layers to come into contact and resulting in an ionic short circuit. The separator, in that case, is not covered, which leaves it vulnerable to these issues. Therefore, a need exists to provide a bipolar battery that helps to prevent a short circuit in bipolar stacked cells.

**SUMMARY OF THE INVENTION**

This summary is provided to introduce a selection of concepts in a simplified form that are further described below in the DETAILED DESCRIPTION OF THE INVENTION. This summary is not intended to identify key features of the claimed subject matter, nor is it intended to be used as an aid in determining the scope of the claimed subject matter.

In accordance with one embodiment of the present invention, a bipolar stacked battery is disclosed. The bipolar stacked battery has a plurality of bipolar electrodes. Each of the bipolar electrodes has a current collector. A cathode layer containing a cathode active material is formed on a first surface of the current collector. An anode layer containing an anode active material is formed on a second surface of the current collector. A separator layer is formed on the cathode layer and the anode layer, wherein the separator layer extends past opposing side edges of the cathode layer and the anode layer. An insulator is formed on exposed side edges on at least one side of the current collector and extends past the current collector. A pair of terminal stacks is provided, wherein one of the pair of terminal stacks is formed at a higher voltage side of the bipolar stacked battery and a second of the pair of terminal stacks is formed on a lower voltage side of the bipolar stacked battery.

In accordance with one embodiment of the present invention, a bipolar stacked battery is disclosed. The bipolar stacked battery has a plurality of bipolar electrodes. Each of the bipolar electrodes has a current collector. A cathode layer containing a cathode active material is formed on a first surface of the current collector. A anode layer containing an anode active material is formed on a second surface of the current collector. A separator layer is formed on the cathode layer and the anode layer, wherein the separator layer extends past opposing side edges of the cathode layer and the anode layer. An insulator is formed on exposed side edges on at least one side of the current collector and extending past the current collector. A gap is formed between at least one of the anode layer and the insulator, the insulator formed on exposed areas on the first surface of the current collector where the anode layer is formed, wherein the separator is positioned within the gap between the anode layer and the insulator or between the cathode layer and the insulator, the insulator formed on exposed areas on the second surface of the current collector where the cathode layer is formed, wherein the separator is positioned within the gap between the cathode layer and the insulator.

## BRIEF DESCRIPTION OF THE DRAWINGS

The present application is further detailed with respect to the following drawings. These figures are not intended to limit the scope of the present application, but rather, illustrate certain attributes thereof.

**FIGURE 1** is a top view of an exemplary stacked cell in accordance with one embodiment of the disclosure;
**FIGURE 2** is a cross-sectional view of the exemplary stacked cell of **FIGURE 1,** taken along line A-A' in accordance with one embodiment of the disclosure;
**FIGURE 3** is a top view of a layer of the exemplary stacked cell of **FIGURE 1** in accordance with one embodiment of the disclosure;
**FIGURE 4** is a cross-sectional view of the exemplary layer of **FIGURE 3,** taken along line A-A' in accordance with one embodiment of the disclosure;
**FIGURE 5** is a top view of another exemplary layer of the stacked cell of **FIGURE 1** in accordance with one embodiment of the disclosure;
**FIGURE 6** is a cross-sectional view of the exemplary layer of **FIGURE 5,** taken along line A-A' in accordance with one embodiment of the disclosure;
**FIGURE 7** is a top view of another exemplary layer of the stacked cell of **FIGURE 1** in accordance with one embodiment of the disclosure;
**FIGURE 8** is a cross-sectional view of the exemplary layer of **FIGURE 7,** taken along line A-A' in accordance with one embodiment of the disclosure;
**FIGURE 9** is a cross-sectional view of an exemplary cathode terminal stack in accordance with one embodiment of the disclosure;
**FIGURE 10** is a cross-sectional view of another exemplary cathode terminal stack in accordance with one embodiment of the disclosure;
**FIGURE 11** is a cross-sectional view of an exemplary anode terminal stack in accordance with one embodiment of the disclosure;
**FIGURE 12** is a cross-sectional view of another exemplary anode terminal stack in accordance with one embodiment of the disclosure;
**FIGURE 13** is a front view of the exemplary stacked cell of **FIGURE 1** in accordance with one embodiment of the disclosure;
**FIGURE 14** is an exploded front view of the exemplary stacked cell of **FIGURE 13** in accordance with one embodiment of the disclosure;
**FIGURE 15** is a top view of an exemplary air-tight pouch in accordance with one embodiment of the disclosure;
**FIGURE 16** is a cross-sectional view of the exemplary air-tight pouch of **FIGURE 15** in accordance with one embodiment of the disclosure;
**FIGURE 17** is a top view of the exemplary air-tight pouch with the stacked cell contained therein in accordance with one embodiment of the disclosure;
**FIGURE 18** is a cross-sectional view of the exemplary air-tight pouch of **FIGURE 17** in accordance with one embodiment of the disclosure;
**FIGURE 19** is a top view of an exemplary battery casing with the stacked cell contained therein in accordance with one embodiment of the disclosure;
**FIGURE 20** is a cross-sectional view of the exemplary battery casing of **FIGURE 19** in accordance with one embodiment of the disclosure;
**FIGURE 21** is a cross-sectional view of an exemplary stacked cell in accordance with one embodiment of the disclosure;
**FIGURE 22** is a magnified view of the exemplary stacked cell of **FIGURE 21** in accordance with one embodiment of the disclosure;
**FIGURE 23** is a cross-sectional view of an exemplary stacked cell in accordance with one embodiment of the disclosure;
**FIGURE 24** is a cross-sectional view of an exemplary stacked cell in accordance with one embodiment of the disclosure;
**FIGURE 25** is a cross-sectional view of an exemplary stacked cell in accordance with one embodiment of the disclosure;

FIGURE 26 is a magnified view of the exemplary stacked cell of FIGURE 25 in accordance with one embodiment of the disclosure;

FIGURE 27 a cross-sectional view of an exemplary stacked cell in accordance with one embodiment of the disclosure;

FIGURE 28 is a cross-sectional view of an exemplary stacked cell in accordance with one embodiment of the disclosure;

FIGURE 29 is a magnified view of the exemplary stacked cell of FIGURE 28 in accordance with one embodiment of the disclosure;

FIGURE 30 is a cross-sectional view of an exemplary stacked cell in accordance with one embodiment of the disclosure;

FIGURE 31 is a graph showing a charge and discharge profile of an exemplary stacked cell in accordance with one embodiment of the disclosure; and

FIGURE 32 is a graph showing a charge and discharge profile of an exemplary stacked cell in accordance with one embodiment of the disclosure.

## DETAILED DESCRIPTION OF THE INVENTION

The description set forth below is intended as a description of presently preferred embodiments of the disclosure and is not intended to represent the only forms in which the present disclosure can be constructed and/or utilized. The description sets forth the functions and the sequence of steps for constructing and operating the disclosure. It is to be understood, however, that the same or equivalent functions and sequences can be accomplished by different embodiments that are also intended to be encompassed within the spirit and scope of this disclosure.

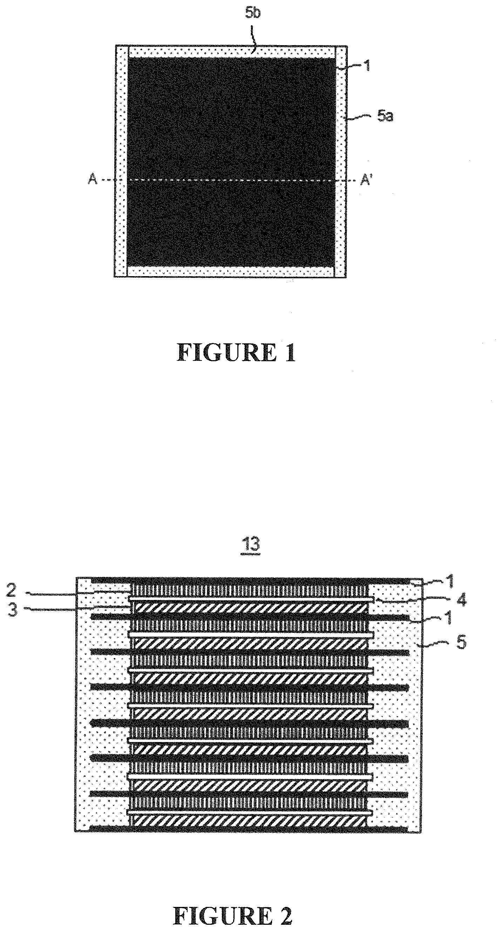

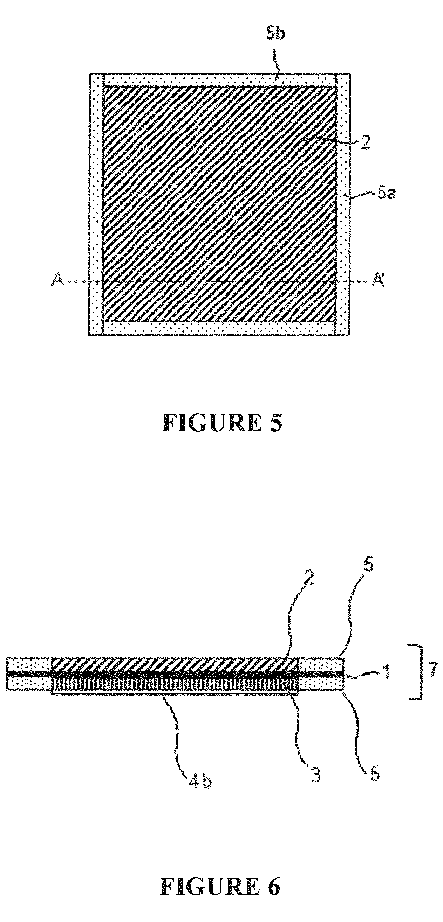

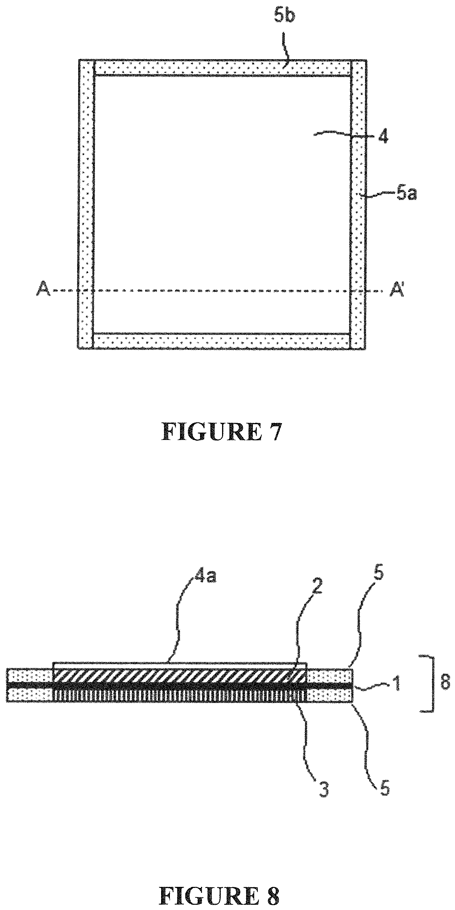

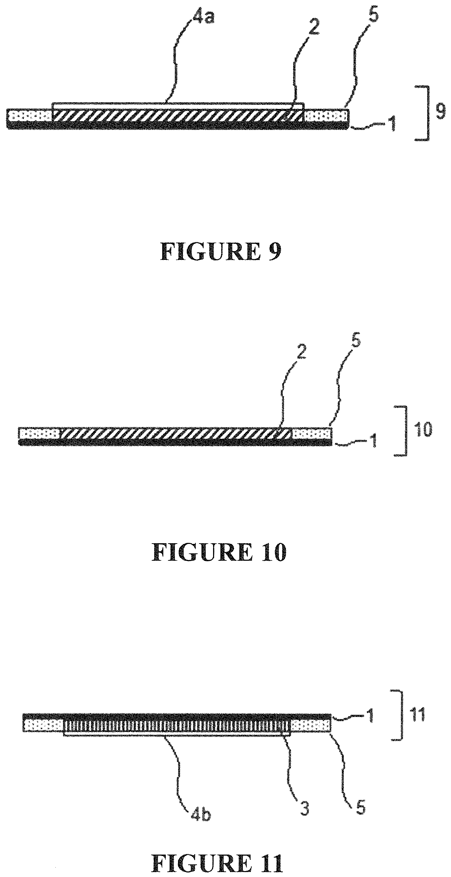

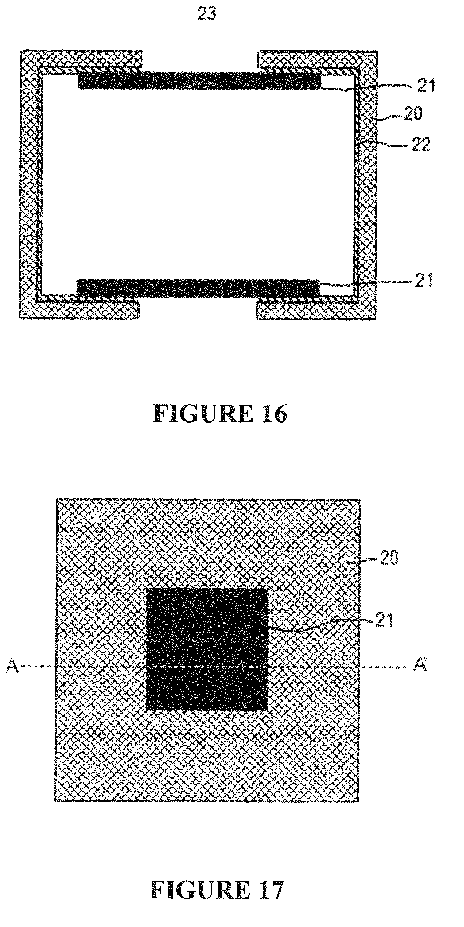

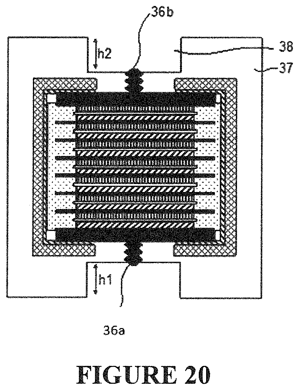

FIGURES 1-20 together show an embodiment of a bipolar battery of the present invention. In its simplest form, the bipolar battery comprises a stacked cell 13, an insulator 5 that covers the entire surface of electrode and separator 4 allowing for a much lower risk of an ionic short. In accordance with one embodiment, the components of the bipolar battery may be formed in an air-tight pouch 23, and a unique battery casing which has electric connector 36 in a concavity 38.

Stacked Cell

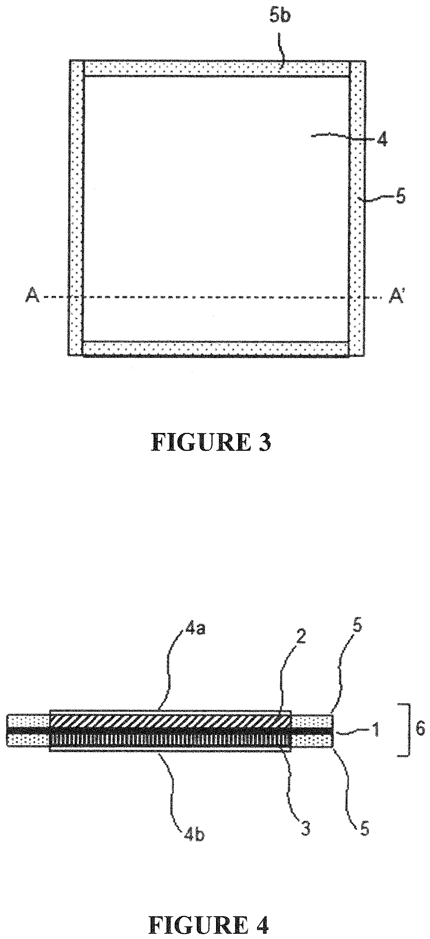

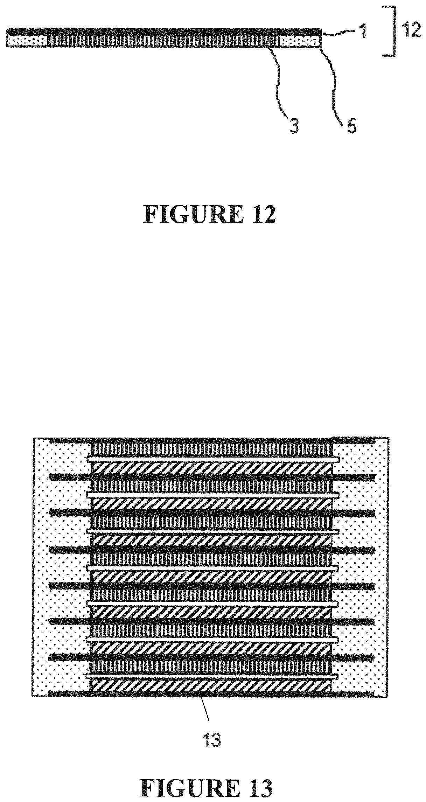

FIGURE 1 shows a schematic of a stacked cell 13. FIGURES 3-12 schematically show the structure of layers of an electric element 6-12, which are components of the stacked cell 13. And FIGURES 13-14 show side views of the stacked cell 13.

At the terminal of the stack at the higher voltage side, an electric cathode terminal stack (either cathode terminal stack 9 or cathode terminal stack 10) is used depending on the position of separator 4. At the terminal of the stack at the lower voltage side, an anode terminal stack (either anode terminal stack 11 or anode terminal stack 12) is used depending on the position of separator 4. From the second layer counting from the terminal, the electric components 6, 7, 8 or a combination of those electric components 6, 7, 8 will be stacked. Each layer is laminated by separator 4. As the result, in the direction from the high voltage side to the low voltage side, the stacked cell 13 comprises the layer of the current collector 1, the cathode layer 2, the separator 4, the anode layer 3, the current collector 1, the cathode layer 2, the separator 4, the anode layer 3 and so on in this repeating order.

As shown in FIGURE 1, the edge of the stack is covered by reinforcement which comprises an insulator 5. The insulator 5 does not have conductivity of either electrons or ions. As shown in FIGURE 1 top view and FIGURE 2 cross section, the reinforcement (insulator 5) covers the exposed edge of the current collector 1, the cathode layer 2, the anode layer 3, and the separator 4. Namely, none of the layers are contacting any of the other layers in/between the electric stacks. The side of the stack cell 13 is completely covered by the insulator 5 and none of the current collector 1, the cathode layer 2, the anode layer 3, nor the separator 4 is exposed to the edge of stacked cell 13.

The current collector 1 may be composed of metal foil, a metal mesh, or any other suitable material, while metal foil is preferable. Examples of metal that may be used in the current collector 1 include but are not limited to Cu, Ni, Cr, Au, Pt, Ag, Au, Al, Fe, Ti, Zn, Co and stainless steel. It can be the metal pure element, doped, alloy or clad. The surface of the metal may also be covered with carbon or other material. This will ensure good adhesion with the cathode layer 2 and the anode layer 3. In addition to metal, carbon may also be used for the current collector 1. Resin composites with an electron conductor (metal or carbon) as filler can also be used for the current collector 1. Possible carbon filler materials include acetylene black (AB), Ketjen black (KB), vapor grown carbon fiber (VGCF), carbon nanotubes, carbon nanohorns, and fullerenes. Possible filler metals include stainless steel, Cu, Ni, Cr, Au, Pt, Ag, Au, Al, Fe, Ti, Zn, Co. The shape of the filler may be spherical, fibrous, needle-like, or hollow. When needle or fiber-shaped fillers are used, it may be effective to make them oriented. This is because the orientation controls the flow of electrons and makes it easier to interrupt the current in the event of an abnormality.

The thickness of the current collector 1 may be of any suitable thickness. For example, the thickness of the current collector **1** is preferably between 0.1 um to 1 mm, and is more preferably between **1** um to 50 um.

The cathode layer 2 is a layer containing at least a cathode active material (CAM). Examples of the CAM include, layered lithium containing oxide materials, such as $LiCoO_2$, $LiMnO_2$, $LiNiO_2$, $LiNi_xMn_yCo_{1-x-y}O_2$, $LiNi_xCo_yAl_{1-x-y}O_2$, lithium containing phosphate with olivine structure, such as $LiFePO_4$, $LiFe_xMn_{1-x}PO_4$, $LiMnPO_4$, $LiFe_xCo_{1-x}PO_4$, $LiCoPO_4$, lithium containing oxide materials with spinel structure, such as $LiNi_{0.5}Mn_{1.5}O_4$, $LiMn_2O_4$, lithium excess layered structured oxide, such as $Li_2MnO_3$, $Li_2RuO_3$, $Li_2Ru_xTi_{1-x}O_3$, $Li_2Ru_xSn_{1-x}O_3$, $Li_2Mn_xTi_{1-x}O_3$, $Li_2Mn_xSn_{1-x}O_3$, layered lithium containing sulfide materials, such as $TiS_2$, $MoS_2$, $NbS_2$, $TaS_2$, Sulfur, or lithium containing sulfide with Chevrel structure, such as $LiCu_xMoS_{1-z}$.

The surface of CAM may be coated by thin layer of materials (coating). Examples of coating include crystalline phase, such as $Li_2ZrO_3$, $LiNbOs$, $Li_3BO_3$, $Li_3B_{11}O_{18}$, $LiPOs$, $Li_3PO_4$, $LiTi_2(PO_4)_3$, $LiZr(PO_4)_3$, $ZrO_2$, $B_2O_3$, $Al_2O_3$, $Nb_2O_5$, $EtOLi$, $MtOLi$, $LiOH$, $Li_2CO_3$ and/or amorphous phase, such as metal alkoxide, metal phosphate. The cathode layer **2** may further contain solid electrolytes, binders, electron conductive additives, in addition to CAM. Examples of electrolytes include organic liquid, organic polymer, inorganic solids. Preferably, the electrolytes comprise inorganic solids because of a higher transference number of lithium compared to liquid and because of a higher ionic conductivity than organic polymer. Furthermore, inorganic solids are usually rigid and do not show liquidity which is preferred in order to build stacked cell **13** without ionic shorting.

Preferred examples of electrolytes include the materials of Li-P-O-N, Li-Si-O, LiB-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or any combination of those), Li-M'-S-O(M' is B, Al, Si, P, Zn, Ge, Zr, Sn or any combination of those), Li-P-S-X (X is F, Cl, Br or any combination of those), Li-P-S-O-X' (X' is F, Cl, Br or any combination of those), Li-B-H, LiB-N-H, Li-B-H-O, Li-B-N-H-O, Li-M"-X" (M is In, Zr, Sc, Ga, Nb, Ta or any combination of those; X" is F, Cl, Br or any combination of those), Li-M"-X"-O(M" is In, Zr, Sc, Ga, Nb, Ta or any combination of those; X" is F, Cl, Br or any combination of those).

Examples of a binder that may be contained in the cathode layer 2 include butadiene rubber (BR), butyl rubber (IIR), acrylate butadiene rubber (ABR), polyvinylidene difluoride (PVDF), and Polytetrafluoroethylene (PTFE). Side chains of the binder may be modified by functional groups.

In addition, the cathode layer **2** may contain electron conductive additives. For example, various types of carbon may include acetylene black (AB), Ketjen black (KB), VGCF, carbon nanotubes, carbon nanohorns, and fullerenes.

The thickness of the cathode layer **2** is not specifically limited, but a thicker layer may be preferred when higher capacity is required. For example, the thickness of cathode layer **2** is preferably between 0.1 um to 1 mm, and is ideally between 60um to 500 um.

The anode layer **3** is a layer containing at least an anode active material (AAM). Examples of the AAM include, layered lithium containing sulfide materials, such as $TiS_2$, $MoS_2$, $NbS_2$, $TaS_2$, titanium containing oxides, such as, $Li_4Ti_5O_{12}$, $Ti_xNb_yO_z$, $Li_xTi_2(PO_4)_3$, tungsten containing oxides, such as $Nb_{16}W_5O_{55}$, $Nb_{18}W_{16}O_{93}$, vanadium containing oxide, such as $LiVO_2$, Artificial carbon (or hard carbon), Graphite, Li-metal alloy, such as $Li_xIn$, $Li_xSn$, $Li_xSi$, $Li_xGe$, $Li_xAl$, or metallic lithium.

The anode layer **3** may further contain solid electrolytes, binders, electron conductive additives, in addition to AAM. Examples of electrolyte include organic liquid, organic polymer, inorganic solids. Preferably, the electrolyte comprises inorganic solids because of higher transference number of lithium compared to liquid and higher ionic conductivity than organic polymer. Furthermore, it is also because inorganic solids are usually rigid and do not show liquidity which is preferred to compose stacked cell **13** without ionic shorting.

Preferred examples of electrolyte include the materials those have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or any combination of those), Li-M'-S-O(M' is B, Al, Si, P, Zn, Ge, Zr, Sn or any combination of those), Li-P-S-X (X is F, Cl, Br or any combination of those), Li-P-S-O-X' (X' is F, Cl, Br or any combination of those), Li-B-H, Li-B-N-H, Li-B-H-O, Li-B-N-H-O, Li-M"-X" (M" is In, Zr, Sc, Ga, Nb, Ta or any combination of those; X" is F, Cl, Br or any combination of those), Li-M"-X"-O(M" is In, Zr, Sc, Ga, Nb, Ta or any combination of those; X" is F, Cl, Br or any combination of those).

Examples of a binder that may be contained in the anode layer **3** include butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

In addition, the anode layer **3** may contain electron conductive additives. For example, various types of carbon may include acetylene black (AB), Ketjen black (KB), VGCF, carbon nanotubes, carbon nanohorns, and fullerenes.

The thickness of the anode layer **3** is not specifically limited, but a thicker layer may be preferred when higher capacity is required. For example, the thickness of the anode layer **3** is preferably between 0.1 um to 1 mm, and is more preferably between 60um to 500 um.

The separator **4** is an electron insulator but an ionic conductor. The electrolyte can be either organic liquid, organic polymer or inorganic solid. If an organic based electrolyte (liquid or polymer) is chosen, the separator **4** might be porous membrane comprising polymers such as Polyethylene (PE), Polypropylene (PP) and any combination of those; the membrane is immersed by organic based electrolyte.

Preferably, separator **4** is comprised of inorganic solids because of higher transference number of lithium compared to liquid and higher ionic conductivity than organic polymer. This is also because inorganic solids are usually rigid and do not show liquidity which is preferred to compose stacked cell **13** without ionic shorting.

Examples of electrolyte include organic liquid, organic polymer, inorganic solids. Preferably, electrolytes are inorganic solids because of higher transference number of lithium compared to liquid and higher ionic conductivity than organic polymer. Which is also because inorganic solids are usually rigid and do not show liquidity which is preferred to compose the stacked sell **13** without ionic shorting. Preferred examples of electrolyte include the materials those have composition of Li-P-O-N, Li-Si-O, Li-B-Si-O, Li-B-O, Li-C-B-O, Li-Al-Si-O, Li-Ti-Al-P-O, Li-Zr-Al-P-O, Li-La-Zr-O, Li-La-Ta-Zr-O, Li-La-Nb-Zr-O, Li-M-S (M is B, Al, Si, P, Zn, Ge, Zr, Sn or combination of those), Li-M'-S-O(M' is B, Al, Si, P, Zn, Ge, Zr, Sn or combination of those), Li-P-S-X (X is F, Cl, Br or combination of those), Li-P-S-O-X' (X' is F, Cl, Br or combination of those), Li-B-H, Li-B-N-H, Li-B-H-O, Li-B-N-H-O, Li-M"-X" (M" is In, Zr, Sc, Ga, Nb, Ta or combination of those; X" is F, Cl, Br or combination of those), Li-M"-X"-O(M" is In, Zr, Sc, Ga, Nb, Ta or combination of those; X" is F, Cl, Br or combination of those).

The solid electrolyte layer may contain a binder in addition to the above-mentioned solid electrolyte material. Examples of a binder that may include butadiene rubber (BR), butyl rubber (IIR), acrylate butadiene rubber (ABR), polyvinylidene difluoride (PVDF), Polytetrafluoroethylene (PTFE). Side chains of the binder may be modified by functional groups.

The thickness of the separator **4** is not specifically limited, but a thinner layer may be preferred when higher capacity is required. For example, the thickness of separator **4** is preferably between 0.1 um to 1 mm, and is more preferably between 0.1um to 50 um.

The electron and ion insulator **5** is made to enhance of insulation between layers and thus enable the stacked cell **13** to exhibit high voltage. It is intricately formed on the current collector **1,** enveloping both its longer and shorter sides meticulously. Its very presence is to ensure that any surface area of the current collector **1,** which remains unoccupied by the cathode layer **2** or anode layer **3,** is fully shielded.

In terms of its electrical properties, the electron and ion insulator **5** is built to be an exceptional insulator. Its electric conductivity must fall below $10^{-8}$ S/cm, with a stricter and more desirable threshold being below $10^{-10}$ S/cm. This ensures that the insulator performs at its optimum, providing maximum protection against any undesirable electrical currents.

The position of the electron and ion insulator **5** is not bound by stringent restrictions. The guiding principle is that the current collector **1** should be comprehensively shielded. In practical terms, this might mean that the insulator **5** could grace both sides of the current collector - one side that faces the cathode layer **2** and the other that faces the anode layer **3.**

While the exact area of the insulator **5** on the current collector's **1** surface is not strictly defined, it's essential for it to sufficiently cover any regions left exposed from the edge of the electrode active material layer. The key is for it to insulate the current collector's **1** surface electronically. Yet, it's vital to avoid the formation of the insulator **5** on either the cathode layer **2** or the anode layer **3.** Such a placement could be problematic during the bonding process when creating the stacked cells **13.** Overlaps between the electrode and insulator layers could create regions of uneven pressure. Such disparities in pressure could damage the current collector **1** or even the separator layer. Moreover, overlapping areas would naturally be bulkier than the mere edges of the electrode, compromising the insulator's sealing capabilities. Any laxity in sealing could lead to ionic shorting, with ion conductors possibly seeping or gliding out of the separator. In the direst of circumstances, direct contact between separator layers could induce an ionic short circuit, severely hampering the battery's functionality.

The gap or distance between the cathode layer **2** and the insulator **5,** denoted as width **(r)** of the bare surface of the current collector **1,** should be carefully calibrated to ensure insulation between layers. It is not limited by rigid parameters, but the width **r** should ideally span a range from 0.0001 % to 10% of the square root of S, where S represents the area of the cathode layer **2,** measured in cm$^2$. This ensures a balanced design, offering optimum insulation while maintaining the structural integrity and performance of the battery. The gap or distance criteria between cathode layer **2** and insulator **5** is applicable to those between anode layer **3** and insulator **5.**

The materials used for the electron and ion insulator **5** is not limited to specific materials as long as the material has required capability for insulations. May be thermosoft plastic are preferred because softened plastic can fill the gap or void those are created during lamination process, and also can cover the edge of the current collector **1** and the separator **4** after the lamination process due to liquidity or plastic deformation. Examples of materials for the electron and ion insulator **5** include; Acrylic, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE).

The insulator **5** can consist of multiple different materials. For example, as shown in **FIGURE 1,** the vertical edge **5a** does not need to be same materials as horizontal edge **5b.**

The bipolar battery of the present invention is an improvement over currently existing bipolar batteries, because in the stacked cell **13,** the current collector **1** of only the top layer and the bottom layer are exposed to the external environment. In the stacked cell **13,** the edge of stack is fully covered by reinforcement made of insulator **5** and none of current collector **1,** cathode layer **2,** anode layer **3,** nor separator **4** is exposed. Furthermore, in the stacked cell **13,** the separator **4** area is larger than both cathode layer **2** and anode layer **3,** but smaller than current collector **1.** With this configuration, the short circuit due to ionic contact to another layer can be avoided while internal short circuit (cathode and anode) is avoided. Finally, in the stacked cell **13,** none of current collector **1** nor separator **4** at different layers are touched.

Air-tight Pouch

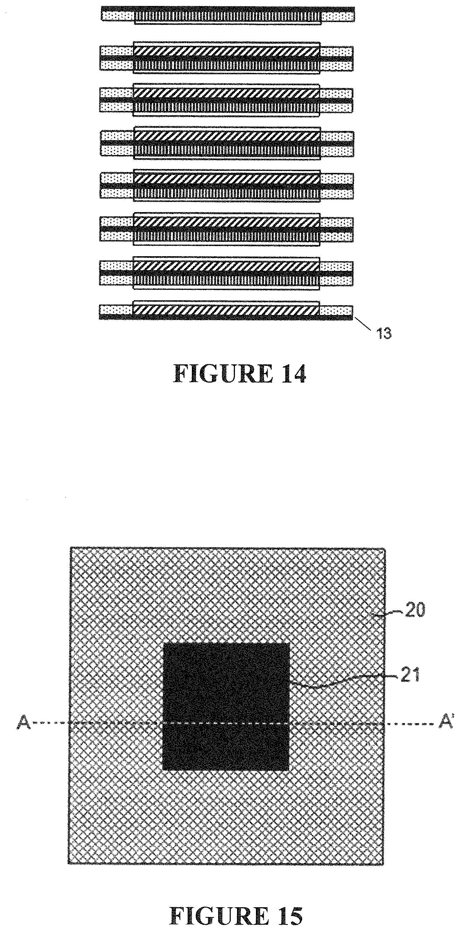

The air-tight pouch **23** shown in **FIGURES 15-18** plays a multifaceted role in the overall architecture of the proposed battery system. The air-tight pouch **23** comprises the current collector **21** and the insulator **20** and the pouch **23** serves several functions.

One of the primary roles of the air-tight pouch **23** is its robust protection against moisture intrusion. With airtightness, it forms an impenetrable barrier, ensuring that no moisture makes its way into the stacked cells **13** housed within it. The significance of this feature cannot be overstated, as moisture ingress can be detrimental to the overall health, efficiency, and life of battery cells.

Apart from moisture protection, the pouch **23** has a salient feature that allows the creation of a vacuum environment for the stacked cell **13.** By doing so, the environment within the pouch **23** remains inert, which is crucial for maintaining the chemical and physical integrity of the stacked cell **13.** An inert environment ensures that there's no undesired chemical reaction that might otherwise compromise the performance or safety of the cell. Also, air-tight pouch **23** is the provision of atmospheric pressure to the stacked cell **13.** This feature is ingeniously designed without the addition of any mechanical parts. Subjecting the battery to a modicum of pressure can have a plethora of benefits. It can aid in the reduction of internal resistance within the battery, thereby enhancing its cycling capabilities and overall efficiency.

After the vacuum lamination process, the air-tight pouch **23** is compatible with further densification of the stacked cell **13** using an isostatic press. This ensures that the cell components are compacted uniformly, ensuring optimum performance and longevity.

The air-tight pouch **23** plays a role in facilitating vacuum operations of the system. Since the current collector **21** of the airtight pouch **23** establishes an electrical connection with the stacked cell **13,** it ensures that the cell operates seamlessly under vacuum conditions.

Insulator **20** can be the same material as the electron and ion insulator **5** used in stacked cell **13** or a different material. Any suitable material may be used, as long as it is not electron and ion conductive. It can be ceramics or plastic, especially if it has low permeability to moisture and oxygen. If the process requires pressurization of stack cell **13** using an air-tight pouch **23,** plastic is especially desirable. This is because plastic is generally more pliable than ceramics, and some plastic deformation is expected during pressurization, and the risk of cracking is expected to be less than that of fragile ceramics.

Plastic materials for insulator **20** include Acrylic, such as Polyacrylic acids (PAA), Poly (methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE).

There can be a further different thermoplastic material **22** inside insulator **20.** This is expected to improve the thermal weldability of insulator **20,** reduce moisture permeability, and maintain a high vacuum. If thermoplastic material **22** is used, its welding temperature should be lower than that of insulator **20.** This will improve the air-tightness of the air-tight pouch **23** while maintaining the mechanical strength of the insulator **20.**

The thermoplastic layer **22** may consist of a single material or may be multilayered, consisting of multiple materials. For example, if it is a single material, Acrylic, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE) are candidates for materials. In the case of multilayer, it is a combination of the above materials. For example, but not limited to, a PP/PE duplex structure, a PP/PE/PP triplex structure, a PE/PP/PE triplex structure, etc. are possible.

The position of thermoplastic layer **22** is not specified as long as sufficient sealing can be ensured at the junction of one insulator **20** and another insulator **20** as well as at a junction between an insulator **20** and current collector **21.** For example, it may cover the entire surface of insulator **20,** or it may cover only the junction between two insulators **20,** or it may cover only the junction between current collector **21** and insulator **20.**

The thickness of insulator **20** is not specifically limited, but a thinner layer may be preferred when higher capacity is required. For example, the thickness of insulator **20** is preferably between **1** um to 2 mm, and is more preferably between 10um to 1,000 um.

The current collector **21** of the air-tight pouch **23** may be composed of metal foil, a metal mesh, etc., and is especially preferably metal foil. Examples of metal constituting the current collector **1** include Cu, Ni, Cr, Au, Pt, Ag, Au, Al, Fe, Ti, Zn, Co and stainless steel. It can be the metal pure element, doped, alloy, or clad. The surface of the metal may also be covered with carbon or other material. This will ensure good adhesion with the cathode layer **2** and anode layer **3.** In addition to metal, carbon can also be used for the current collector **21.** Resin composites with an electron conductor (metal or carbon) as filler can also be used for the current collector **1.** Possible carbon filler materials include acetylene black (AB), Ketjen black (KB), VGCF, carbon nanotubes, carbon nanohorns, and fullerenes.

Possible filler metals include stainless steel, Cu, Ni, Cr, Au, Pt, Ag, Au, Al, Fe, Ti, Zn, Co. The shape of the filler can be spherical, fibrous, needle-like, or hollow. When needle or fiber-shaped fillers are used, it may be effective to make them oriented. This is because the orientation controls the flow of electrons and makes it easier to interrupt the current in the event of an abnormality.

The thickness of the current collector **21** is not specifically limited, and for example, is preferably between 0.1 um to 2 mm, and is more preferably between 10 um to 1,000 um.

The bipolar battery of the present invention is an improvement over currently existing bipolar batteries, because the air-tight pouch **23** is equipped with a current collector **21** and insulating surface **20.** Furthermore, the air-tight pouch **23** allows the densification process of the stack and the air-tight pouch **23** is positioned inside a vacuum.

Battery Casing

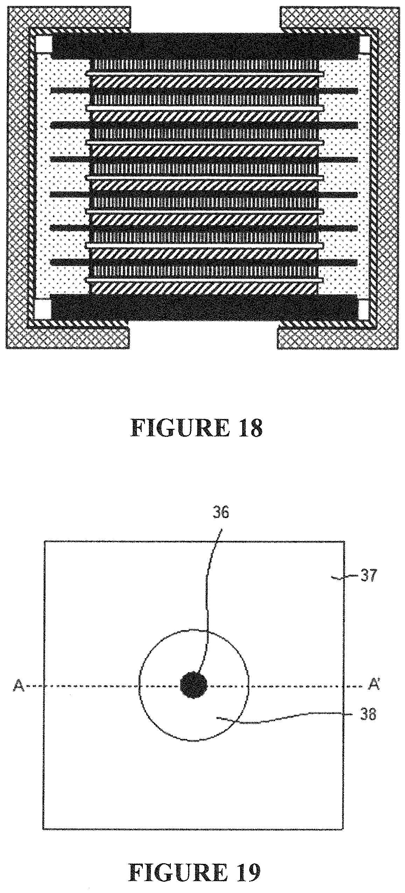

A bipolar battery is preferably accommodated in the battery casing as a whole stacked cell **13,** as shown in **FIGURES 19-20,** to prevent external impact and environmental deterioration in use. Also, the casing enables one to handle the high voltage battery system during operation, installation to device, disassembly or maintenance.

The battery casing comprises a housing **37** that protects the stacked cell **13** (which may or may not be in air-tight pouch **23)** from outside air and shock during actual use. In addition to the mechanical strength as required for a normal battery cell, housing **37** should be of a more insulating construction because stacked cell **13** has a higher voltage than a normal electrochemical cell. The material should be composed exclusively of electrically insulating materials. For example, a metal housing, such as those normally used for lithium-ion batteries or nickel-metal hydride, is not desirable, as there is concern that battery performance may be compromised by insulation breakdown.

Ceramics, rubber, or plastic are possible materials for housing **37.** For ceramics, alumina, silica, or zirconia could be considered. For plastics, examples include, acrylic, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); and Polytetrafluoroethylene (PTFE).

To ensure the performance of stacked cell **13,** preferably housing **37** is a sealed structure. For example, o-rings, welds, adhesives, etc. may be used to create a sealed structure. When sealing housing **37,** the internal atmosphere should be considered from two perspectives. First, from the standpoint of the chemical stability of the battery itself, the concentration of moisture and oxygen should preferably be low. In addition, considering the possibility of high voltage in stacked cell **13,** noble gases such as He, Ar, and Xe should be avoided, as these gases tend to cause dielectric breakdown under high voltage conditions. Considering the above, the atmosphere inside stacked cell **13** should be vacuum, $N_2$, $SF_6$, etc.

Housing **37** is equipped with electric connector **36** for electrical connection to stacked cell **13,** characterized in that electric connector **36** is located at a height **h** lower than the top surface of housing **37.** For this purpose, housing **37** has a concavity **38,** into which electric connector **36** is placed. Such a structure reduces the risk of inadvertent external shorting of the stacked cell **13** during battery mounting, transport, and maintenance. The risk of external shorts due to creepage discharge is also reduced due to the distance of the electric connectors **36a** and 36b along the housing **37.**

Concavity **38** has a depth **h** and has an electric connector **36** in it. The shape of the concavity can be cylindrical, square, polygonal, hemispherical, or any other shape. Its low area should be as small as possible to reduce the risk of accidental external shorts. In other words, the concavity **38** should be larger than the electric connector **36,** the connector to the external circuit, and the wiring, and should be large enough for maintenance, etc., but not unnecessarily larger than that. The depth **h** of concavity **38** is not specified, **h** should be as small as possible in terms of energy density, but larger is preferable in terms of insulation resistance and external short circuit risk. It can be designed accordingly depending on the battery voltage. For example, **h** could be between 2 mm and 100 mm, although it is not limited to this value. The depth **h1** on the positive electrode side and **h2** on the negative electrode side need not be the same. For example, one of them can be set to zero.

The shape of the electric connector **36** can be, for example, a screw (male or female thread), pin, foil, plate, needle, etc. Preferred materials are metals such as Cu, Al, and stainless steel.

The bipolar battery of the present invention is an improvement over currently existing bipolar batteries, because the battery casing is made of electron/ion insulator. The battery casing has electric connectors **36** that are placed in the concavity **38** to avoid shorting while handling/installation/disassembling/connection. Furthermore, the battery casing is sealed and inside is filled with inert such as vacuum, $N_2$, $SF_6$, but not with noble gases.

The method for manufacturing a high-voltage electrochemical cell comprises the following steps described below.

The method of manufacturing a high voltage electrochemical cell comprises the following steps: a process for protecting the edge of the current collector **1** by placing an insulator **5** on the edge of the current collector **1,** a process for manufacturing an electrode layer by creating a free-standing film of cathode layer **2** and anode layer **3,** a process for placing the free-standing film created by the above process at a position **r** inside the current collector **1** of the insulator **5** formed on the edge of the current collector **1,** and a process for manufacturing a cathode layer **2** and anode layer **3.** The process includes the electrode bonding process, in which the freestanding film created in the above process is placed at the position **r** inside the current collector **1** of the insulator **5** formed on the edge of current collector **1,** cathode layer **2** and anode layer **3** are bonded to current collector **1,** and the anode layer **3**/current collector **1**/cathode layer **2**/ anode layer **3** created in the above process is bonded to both sides or one side of cathode layer **2.** Cathode layer **2** is formed on both sides or one side of cathode layer **2,** and stack **6** or **7** or **8** is formed.

Cathode terminal stack **9** or **10** where only cathode layer **2** is formed on current collector **1** and anode terminal stack **11** or **12** where only anode layer **3** is formed on current collector **1** are created. Stack **11** or **12** is created where only anode layer **3** is formed on current collector **1.** The individual processes are the same as the bipolar stack process, so the description here is omitted.

Stacks and terminal stacks created by the processes described above are stacked to obtain stacked cell **13** by compaction under high pressure. Air-tight pouch **23** may or may not be equipped at this time.

Stacked Cell **13** made by the above process is inserted into casing **30** and sealed. This process produces a high-voltage electrochemical cell.

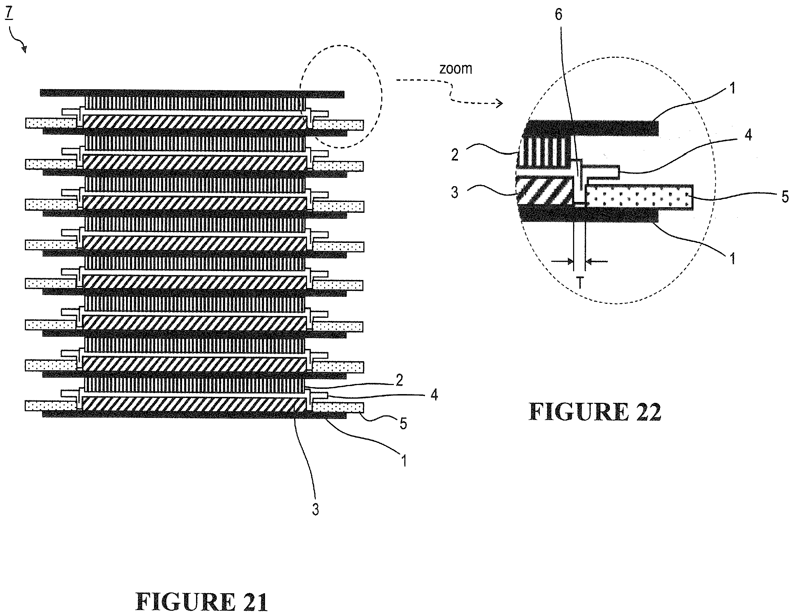

Referring to **FIGURES 21-24,** another embodiment of the stacked cell **13'** may be shown. Similar to the stacked cell **13,** in the direction from high voltage side to low voltage, the stacked cell **13'** may consist of the current collector **1,** the cathode layer **2,** the separator **4,** the anode layer **3,** and another current collector **1.** This configuration of elements **1, 2, 4, 3, 1, 2,.... 2, 4, 3, 1** may be repeated in this repeating order forming the stacked cell **13'.** Each of the layers are formed so that none of the layers are contacting any of the other layers in/between the electric stacks.

The stacked cell **13'** may have an insulator **5.** The insulator **5** may be made to enhance insulation between layers and thus enable the stacked cell **13'** to exhibit high voltage. The insulator **5** may be intricately formed on the current collector **1.** The insulator **5** may be configured to ensure that any surface area of the current collector **1,** which remains unoccupied by the cathode layer **2** or anode layer **3,** is fully shielded.

In terms of its electrical properties, the insulator **5** may be built to be an exceptional insulator. The insulator **5** may be formed of a material that does not have conductivity of either electrons or ions. The insulator **5** may have an electric conductivity below $10^{-8}$ S/cm, with a stricter and more desirable threshold being below $10^{-10}$ S/cm. This ensures that the insulator **5** may perform at its optimum, providing maximum protection against any undesirable electrical currents.

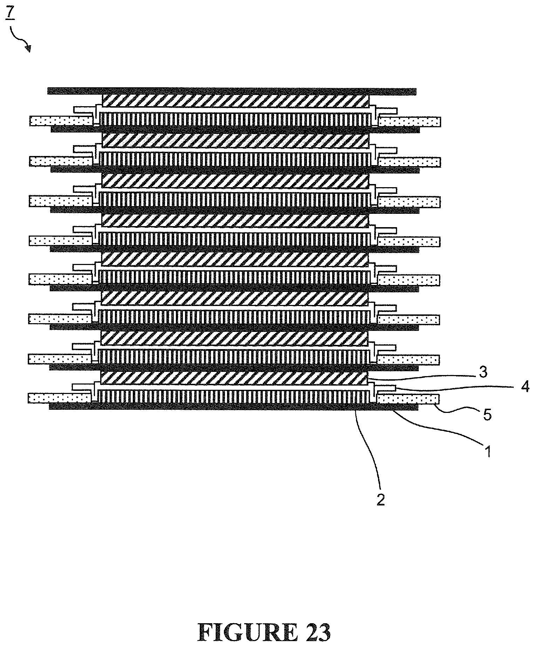

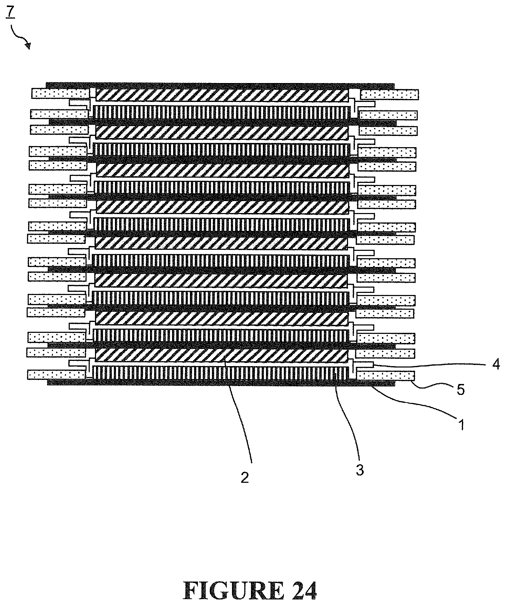

The position of the insulator **5** isn't bound by stringent restrictions. The guiding principle is that at least one of the exposed sides of the current collector **1** should be comprehensively shielded. For example, the insulator **5** may cover a portion of the exposed edge of one side of the current collector **1.** In the embodiment shown in **FIGURES 21** and **22,** the insulator **5** may be formed on a surface **1A** of each current collector **1** located adjacent the anode layer **3.** As may be seen in **FIGURE 22,** a height of the insulator **5** may be less than a height of the anode layer **3.** Alternatively, the insulator **5** may be formed on a surface **1B** of each current collector **1** located adjacent to the cathode layer **2** as may be seen in **FIGURE 23.** As may be seen in **FIGURE 23,** a height of the insulator **5** may be less than a height of the cathode layer **2.** Alternatively, the insulator **5** may be formed on both surfaces **1A** and **1B** of each current collector 1 that is attached to both the cathode layer **2** and the anode layer **3** as may be seen in **FIGURE 24.** As may be seen in **FIGURE 24,** a height of the insulator **5** may be less than a height of the anode layer **3** and a height of the cathode layer **2.**

The insulator **5** can be laminated onto the current collector **1,** though this is not strictly necessary. Laminating the insulator **5** onto the current collector **1** may simplify the production process.

The insulator **5** may not completely seal the edges of the current collector **1.** This configuration may allow gas to escape. Complete sealing of the edges of the current collector **1** may result in gas being trapped during the densification process, causing bubble formation. These bubbles may increase the impedance of the stacked cell **13'** and may accelerate degradation. Additionally, a complete seal may trap gases during prolonged cycling may lead to increased impedance and further degradation of the stacked cell **13'.**

Moreover, leaving the edges unsealed can be beneficial in releasing stress during the pressuring step in the fabrication process of the stacked cell **13',** thereby avoiding breakage of the current collector **1** or the insulator **5.**

While the exact area of the insulator **5** on the exposed surfaces of the current collector **1** may not be strictly defined, it may be essential for the insulator **5** to sufficiently cover any regions left exposed from the edge of the electrode active material layer. The key may be for the insulator **5** to insulate the surfaces of the current collector **1** electronically.

However, it may be important to avoid the formation of the insulator **5** on exposed areas of either the cathode layer **2** or the anode layer **3.** Such a placement could be problematic during the bonding process when creating the stacked cell **13'.** Overlaps between the electrode and insulator **5** could create regions of uneven pressure. Such disparities in pressure could damage the current collector **1** or even the separator **4.** Moreover, overlapping areas would naturally be bulkier than the mere edges of the electrode, compromising the insulating capabilities.

When applying the insulator **5,** a gap **T** on the current collectors **1** may be formed. The distance of the gap **T** on the current collector **1** should be carefully calibrated to ensure insulation between layers. It is not limited by rigid parameters, but the distance should span a range from 0.0001 % to 10% of the square root of S6, where S6 may represents the area of the anode layer 3, measured in cm$^2$. This may ensure a balanced design, offering optimum insulation while maintaining the structural integrity and performance of the stacked cell **13'.** The gap or distance criteria between the anode layer **3** and insulator **5** may also be applicable to those between cathode layer **2** and insulator **5.**

The materials used for the insulating **5** is not limited to specific materials as long as the material has required capability for insulations. The materials used may have been listed previously above. A thermosoft plastic may be preferred because softened plastic can fill the gap or void that may be created during lamination process, and may also cover the edge of current collector **1** and separator **4** after the lamination process due to liquidity or plastic deformation. Examples of the insulator **5** may include, but not limited to: Acrylic, such as Polyacrylic acids (PAA), Poly(methyl methacrylate) (PMMA); Acrylonitrile butadiene styrene (ABS); Polyamide (PA); Polyimide (PI); Polyamide-imide (PAI); Polycarbonate (PC); Polyoxymethylene (POM); Polyether ether ketone (PEEK); Polyetherimide (PEI); Polyethylene (PE); Polyethylene terephthalate (PET); Polyphenylene oxide (PPO); Polyphenylene sulfide (PPS); Polypropylene (PP); Polyvinyl chloride (PVC); Polyvinylidene fluoride (PVDF); Polytetrafluoroethylene (PTFE). The insulator **5** can consist of multiple different materials, such as combinations of the above listed.

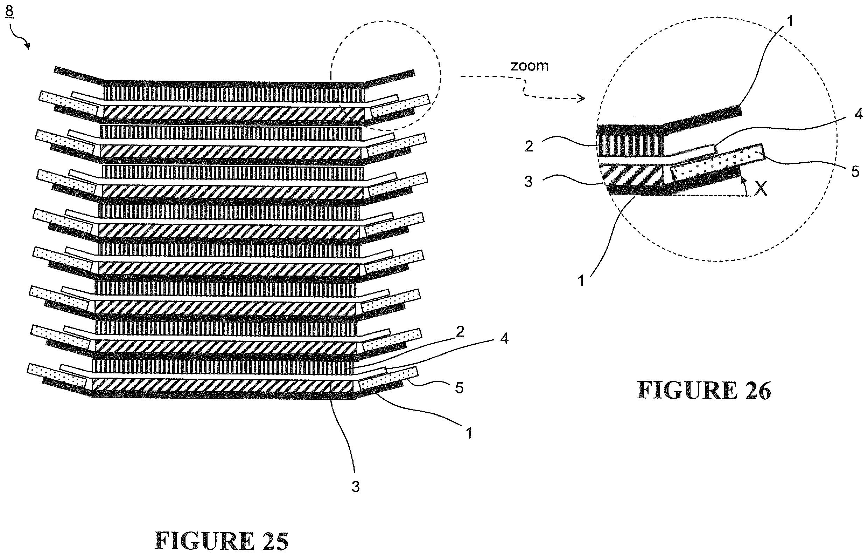

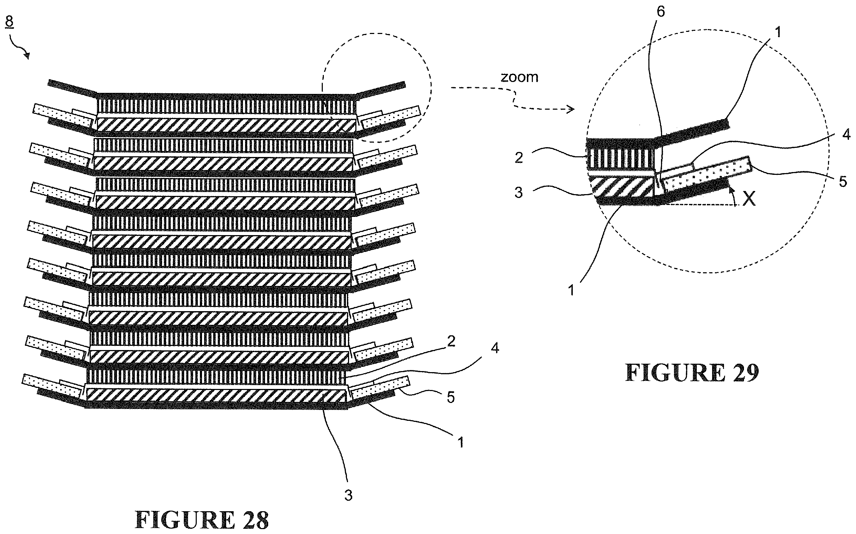

Referring to **FIGURES 25-30,** another embodiment of the stacked cell **13"** may be shown. Similar to the stacked cell **13** and **13',** in the direction from high voltage side to low voltage, the stacked cell **13'** may consist of the current collector **1,** the cathode layer **2,** the separator **4,** the anode layer **3,** and another current collector **1.** This configuration of elements **1, 2, 4, 3, 1, 2,.... 2, 4, 3, 1** may be repeated in this repeating order forming the stacked cell **13".** Each of the layers are formed so that none of the layers are contacting any of the other layers in/between the electric stacks.

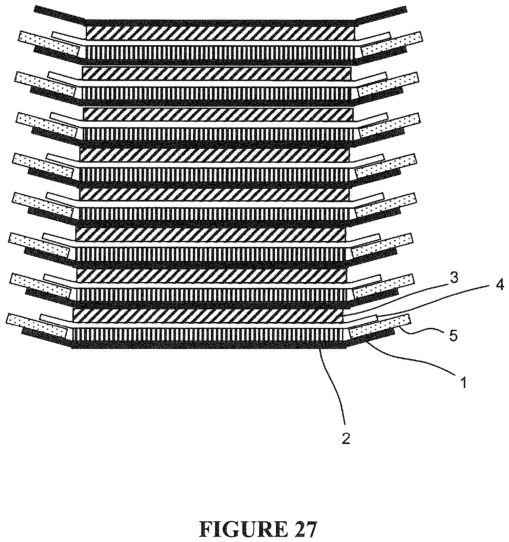

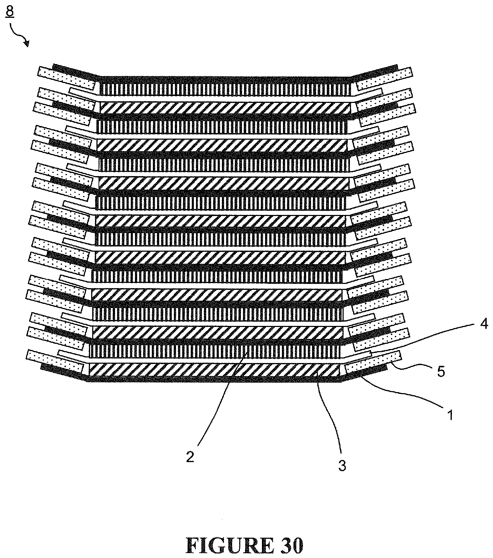

The exposed edge of the current collector **1** may be covered by the insulator **5.** The insulator **5** does not have conductivity of either electrons or ions. The insulator **5** may cover a portion of the exposed edge of one side of the current collector **1.** In the embodiment shown in **FIGURES 25-26** and **28-29,** the insulator **5** may be formed on a surface **1A** of each current collector **1** located adjacent the anode layer **3.** Alternatively, the insulator **5** may be formed on a surface **1B** of each current collector **1** located adjacent to the cathode layer **2** as may be seen in **FIGURE 27.** Alternatively, the insulator **5** may be formed on both surfaces **1A** and **1B** of each current collector **1** that is attached to both the cathode layer **2** and the anode layer **3** as may be seen in **FIGURE 30.**

When the insulator **5** is attached on the exposed surface of current collector **1** adjacent the anode layer **3** as shown in **FIGURES 25-26,** the current collector **1** may be designed to bend up at the edge of the anode layer **3,** generating an angled edge **1A** for the stacked cell **13".** This angled edge **1A** may enhance the structural integrity and ionic insulation of the cells by covering the separator **4** up from the external of cells. The insulator **5** may be laminated onto the current collector **1** and bends up together with the current collector **1,** ensuring proper insulation and alignment within the stacked cell **13"** configuration.

The separator **4** may also bend up with the current collector **1.** Notably, the separator **4** may be smaller than the current collector **1** and the insulator **5,** ensuring that the separator **4** may not be exposed to the external surface. This design may minimize the risk of damage to the separator **4** and may maintain insulation integrity.

The angle **X** of the angled edge **1A** against the base of the current collector **1,** which may be laminated to the anode layer **3** may range from 3 degrees to 90 degrees. More specifically, the angle **X** may range from 5 degrees to 80 degrees. The angled edges **1A** may be beneficial for improving the insulation between each layer and preventing electrical short circuits.

If the insulator **5** is attached to the cathode side of surface of the current collectors **1** as may be seen in **FIGURE 27,** the same criteria used between the anode layer **3** and insulator **5** is applicable to those between the cathode layer **2** and insulator **5.** Also, if the insulator **5** is laminated on both side of the current collector **1** as may be seen in **FIGURE 30,** the angle **X** may range from 3 degrees to 90 degrees. More specifically, the angle **X** may range from 5 degrees to 80 degrees.

In the stacked cell **13",** like the stacked cell **13',** a gap **T** on the current collectors **1** may be formed. The separator **4** may be applied and is squeezed in the gap **T** between the cathode layer **2** or anode layer **3** when forming the angled edge **1A** as may be seen **FIGURE 30.** With the squeezed separator **4,** the electric insulation of the stacked cell **13"** may be improved since the anode layer **3** (or cathode layer **2** or both) may be covered by the separator **4.**

The stacked cell **13"** has been formulated and test as described below. The stacked cell **13"** formed may satisfy the area relationship of:

$$S1 > S3 > S4 > S2 > S5 \geq S6 \text{ or } S1 > S3 > S4 > S2 > S6 \geq S5$$

where:

- S1 = area generated by outer edge of insulator **5**
- S2 = area generated by inner edge of insulator **5**
- S3 = area of current collector **1**
- S4 = area of separator **4**
- S5 = area of cathode layer **2**
- S6 = area of anode layer **3**

A 40 $\mu$m thick carbon coated Aluminum foil (area S3) may have been prepared as the current collector **1,** and a 25 $\mu$m thick Polyetherimide (PEI) film, which may equip adhesive Polyisobutene (PIB), may be attached on to the one of the carbon coated Aluminum foil as an insulator **5**. The area generated by outer edge of insulator **5,** and that of its inner edge are **S1** and S2, respectively.

The cathode layer **2** may be fabricated of a powder of Cathode Active Material (LiNi$_{1/3}$Co$_{1/3}$Mn$_{1/3}$O$_2$, MTI corporation), solid electrolyte (SSE-10, NEI) and PTFE (Daikin America) mixed in the ratio of 87:12:1 (wt%). Then the mixture was extended to the sheet with the thickness 120um to form the cathode layer **2**. The area of the cathode layer **2** is S5.

The anode layer **3** may be fabricated of a powder of Anode Active Material (Li$_4$Ti$_5$O$_{12}$, MSE supplies LLC), solid electrolyte (SSE-10, NEI), carbon black (Imerys) and PTFE (Daikin America) mixed in the ratio of 80:15:1:4 (wt%). Then the mixture was extended to the sheet with the thickness 300um to form the anode layer **3**. The area of anode layer **3** is S6.

The separator **4** may be fabricated of a powder of solid electrolyte (SSE-10, NEI) and PTFE (Daikin America) mixed in the ratio of 97:3 (wt%). Then the mixture was extended to the sheet with the thickness 120um to form the separator **4**. The area of the separator **4** is S4.

The cells of the stacked cell **13"** may be fabricated with stacking the unit cell consisting of the current collector **1,** anode layer **3,** separator **4,** and cathode layer **2**. The layers may be stacked in the order of current collector **1,** anode layer **3,** separator **4,** cathode layer **2,** current collector **1**. This configuration of elements **1, 2, 4, 3, 1, 2,.... 2, 4, 3, 1** may be repeated in this repeating order. In total, 10 of electrochemical cells may be stacked forming the bipolar stacked cell **13"**. The last current collector **1** touching to only the cathode layer **2** may not have the insulator on the surface. The area of S1, S2, S3, S4, S5 and S6 is listed on the table 1 below. The area satisfies S1 > S3 > S4 > S2 > S6 $\geq$ S5.

The angled edge **1A** edge of the stacked cell **13"** may be bent to have the angle (X) of 80 degree.

Table 1

| S1 / cm$^2$ | S2 / cm$^2$ | S3 / cm$^2$ | S4 / cm$^2$ | S5 / cm$^2$ | S6 / cm$^2$ |
| --- | --- | --- | --- | --- | --- |
| 9.07 | 6.15 | 8.04 | 7.07 | 3.80 | 4.91 |

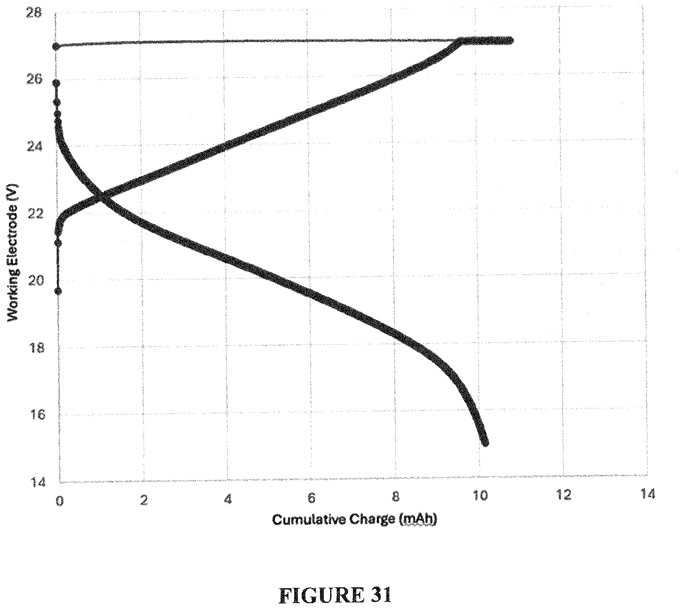

The bipolar stacked cell **13"** may be charged and discharged at a current density of 1.0 mA/cm$^2$ in the voltage range of 15 V to 27 V. The bipolar stacked cell **13"** was able to charge and discharge without any ionic or electronic short. The charge and discharge profile may be shown in **FIGURE 31.**

As a comparison to the example above, the stacked cell **13"** was formulated and tested again as described below. In this embodiment, the stacked cell **13"** satisfied the same area relationships as described above. The current collector **1** was formed in the same manner as in the previous test embodiment except for the thickness of Polyetherimide (PEI) film. In this test embodiment, a 250 $\mu$m thick PEI film, which equips adhesive Polyisobutene (PIB), was attached on to one of the carbon coated Aluminum foil as an insulating frame. The remaining structure of the stacked cell **13"** remained the same. Thus, the fabrication of the cathode layer 2, the anode layer 3, the separator 4, and the fabrication of the stacked cell 13" was the same as in the previous test embodiment.

In this test embodiment, the edge of the stacked cell 13" was not bent. Thus, the angle X was at 0°.

Table 2

| S1 / cm$^2$ | S2 / cm$^2$ | S3 / cm$^2$ | S4 / cm$^2$ | S5 / cm$^2$ | S6 / cm$^2$ |
| --- | --- | --- | --- | --- | --- |
| 9.07 | 6.15 | 8.04 | 7.07 | 3.80 | 4.91 |

Table 3

|  | X (degree) | Coulombic efficiency at 2nd cycle (%) |
|---|---|---|
| Example | 80 | 94.4 |
| Comparative Example | 0 | 64.9 |

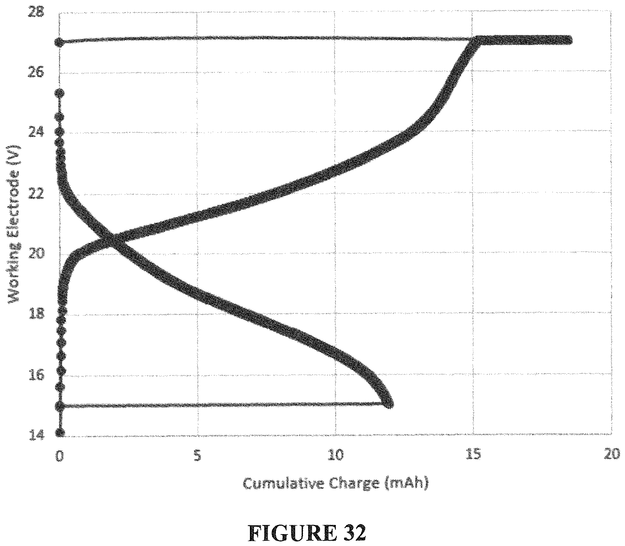

The bipolar stacked cell **13"** was charged and discharged at a current density of 1.0 mA/cm$^2$ in the voltage range of 15 V to 27 V. However, it shows low coulombic efficiency (64.9%) at the 2nd cycle. Also, the voltage profile is lower than the previous test embodiment although it had the same number of stacks. Low coulombic efficiency and overall low voltage profile are the indication of short happening in the cell. The charge and discharge profile may be shown in **FIGURE 32.**

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims, wherein reference to an element in the singular is not intended to mean "one and only one" unless specifically stated, but rather "one or more." All structural and functional equivalents to the elements of the various embodiments described throughout this disclosure that are known or later come to be known to those of ordinary skill in the relevant art are expressly incorporated herein by reference and intended to be encompassed by the claims. Moreover, nothing disclosed herein is intended to be dedicated to the public.

**Claims**

1. A bipolar stacked battery, comprising:
   a plurality of bipolar electrodes, wherein each of the bipolar electrodes comprises:

   a current collector;
   a cathode layer containing a cathode active material formed on a first surface of the current collector;
   an anode layer containing an anode active material formed on a second surface of the current collector;
   a separator layer formed on the cathode layer and the anode layer, wherein the separator layer extends past opposing side edges of the cathode layer and the anode layer; and
   an insulator formed on exposed side edges on at least one side of the current collector and extending past the current collector;
   a pair of terminal stacks, wherein one of the pair of terminal stacks is formed at a higher voltage side of the bipolar stacked battery and a second of the pair of terminal stacks is formed on a lower voltage side of the bipolar stacked battery.

2. The bipolar staked battery of Claim 1, wherein the insulator covers all exposed surfaces of the current collector, the cathode layer, the anode layer, and the separator of the plurality of bipolar electrodes.

3. The bipolar staked battery of Claim 1 or 2, wherein the pair of terminal stacks comprises:
   a cathode terminal stack formed on a higher voltage side of the bipolar stacked battery, the cathode terminal stack comprising:

   a cathode terminal current collector; and
   a cathode terminal layer containing a cathode terminal active material formed on a first surface of the cathode terminal current collector; and
   an anode terminal stack formed at a lower voltage side of the bipolar stacked battery, the anode terminal stack comprising:

   an anode terminal current collector; and
   an anode terminal layer containing an anode terminal active material formed on a first surface of the anode terminal current collector.

4. The bipolar staked battery of Claim 3, wherein the insulator covers all exposed surfaces of the current collector, the cathode layer, the anode layer, and the separator of the plurality of bipolar electrodes, the exposed surfaces of the cathode terminal layer and exposed areas on the first surface of the cathode terminal current collector, and the exposed surfaces of the anode terminal layer and exposed areas on the first surface of the anode terminal current collector.

5. The bipolar staked battery of any preceding Claim, comprising an air-tight pouch surrounding the plurality of bipolar electrodes.

6. The bipolar staked battery of Claim 5, comprising a battery casing surrounding the plurality of bipolar electrodes and the air-tight pouch, wherein an electric connector is positioned within a concavity of the battery casing.

7. The bipolar staked battery of any preceding Claim, wherein opposing side edges of the current collector of the plurality of bipolar electrodes are bent upwards or downwards with respect to the plane of the current collector.

8. The bipolar staked battery of Claim 7, wherein the opposing side edges of the current collector of the plurality of bipolar electrodes are bent upwards at an angle ranging from 5° to 85°.

9. The bipolar staked battery of any preceding Claim, comprising a gap formed between the anode layer and the insulator, the insulator formed on exposed areas on the second surface of the current collector where the anode layer is formed, wherein a section of the separator is positioned within the gap.

10. The bipolar staked battery of any of Claims 1 to 8, comprising a gap formed between the cathode layer and the insulator, the insulator formed on exposed areas on the first surface of the current collector where the cathode layer is formed, wherein a section of the separator is positioned within the gap.

11. The bipolar staked battery of any of Claims 1 to 8, comprising:

a first gap formed between the anode layer and the insulator, the insulator formed on exposed areas on the first surface of the current collector where the anode layer is formed; and
a second gap formed between the cathode layer and the insulator, the insulator formed on exposed areas on the second surface of the current collector where the cathode layer is formed, wherein the separator is positioned within the second gap.

12. The bipolar staked battery of any of Claims 9 to 11, wherein a distance of the gap ranges from 0.0001 % to 10% of the square root of an area of the anode layer measured in $cm^2$.

**FIGURE 1**

**FIGURE 2**

5b

4

5

A —————————————————————— A'

**FIGURE 3**

4a 2 5

1 6

4b 3 5

**FIGURE 4**

5b

2

5a

A ................................................................ A'

**FIGURE 5**

2    5

1    7

4b    3    5

**FIGURE 6**

5b

4

5a

A ——— A'

**FIGURE 7**

4a  2  5

8

1

3  5

**FIGURE 8**

**FIGURE 9**

**FIGURE 10**

**FIGURE 11**

**FIGURE 12**

**FIGURE 13**

**FIGURE 14**

**FIGURE 15**

23

**FIGURE 16**

**FIGURE 17**

**FIGURE 18**

**FIGURE 19**

FIGURE 20

FIGURE 22

FIGURE 21

**FIGURE 23**

**FIGURE 24**

FIGURE 25

FIGURE 26

EP 4 535 524 A2

FIGURE 27

**FIGURE 28**

zoom

**FIGURE 29**

EP 4 535 524 A2

**FIGURE 30**

**FIGURE 31**

**FIGURE 32**

**REFERENCES CITED IN THE DESCRIPTION**

**Patent documents cited in the description**

- US 63542587